# EUROPEAN PATENT APPLICATION

(11) **EP 4 174 044 A1**
(43) Date of publication of application: **03.05.2023**
(21) Application number: 21205161.9
(22) Date of filing: 28.10.2021
(51) Int. Cl.: C04B 28/02, C04B 20/02, C04B 111/00, C04B 111/60, C04B 111/27, C04B 111/70

(54) **A PROCESS FOR MAKING A BINDER FOR A MORTAR**

(71) Applicant: Saint-Gobain Weber France, 94370 Sucy en Brie (FR)
(72) Inventor: Yammine-Malesys, Joumana, 92400 Courbevoie (FR); Lauren, Gunnar, 21600 Pargas (FI)
(74) Representative: Saint-Gobain Recherche

(57) **Abstract**

The present invention relates to a process for making a binder for a mortar, comprising co-milling mineral wool fragments with a dry hydraulic binder to obtain particles having a particle size distribution in volume such that the D90 is less than 100 µm.

## Description

The present invention relates to a mortar composition including industrial byproducts, in particular within its binder. It also relates to said binder, to the process for preparing said binder and said mortar respectively and to the technical mortars obtained.

The denomination mortar designates a mixture usable in masonry, generally in dry form (powder) or paste form, and usually formed from at least one binder (especially mineral, notably cement-based), aggregates or granules or sands and/or finely ground mineral charges called fillers, and additive(s), the term rendering/coating generally designating mortar when it is in its applied form (for example applied on a wall).

Portland cement, which is a binder widely used for the manufacture of mortars, is composed essentially of clinker, and is obtained by crushing starting materials, such as clay and limestone, heating them, and then grinding the obtained clinker. Yet, the preparation of Portland cement, or of other cements like calcium-aluminate cements, constitutes an important source of carbon dioxide emissions (these Portland and high-alumina cements being for example the cause of emissions of around 800 kg of CO₂ per ton of cement produced), as it requires operations of decarbonation (in particular of limestone), of calcining, of clinkering and of heating, in particular at very high temperatures of the order of 1450°C, which provoke such emissions of carbon dioxide. These cements also have the disadvantage to consume energy resources and natural resources.

There also exist formulations for mortars and/or concretes that partially replace the Portland cement clinkers or Portland cement with blast furnace slags or fly ash (resulting from coal-fired power stations), in particular comprising hydraulic binders based on calcium aluminosilicate derivatives such as activated blast-furnace slags like in application US2008/0257223. These binders make it possible in particular to limit partially the amount of Portland cement clinkers in the formulations and consequently to also reduce the carbon footprint of these products. As, in contrast to Portland cement, such aluminosilicate derivatives are not or only slightly hydraulic by nature (in particular they do not form hydrated lime by hydration), it is yet necessary to add an alkaline activator or a lime in order to dissolve the aluminosilicate material and form hydrates responsible for the setting of the material. These compositions, which also comprise variable amounts of source of calcium sulfate, thus incorporate alkaline activator agents, such as soda, which can produce a high pH, causing serious skin irritation when the compositions are used and thus rendering them difficult to handle.

Other replacement products exist like geopolymers but they don't allow to reduce greatly the carbon dioxide emissions and they also use highly alkaline activators with high contents (above 10% by weight depending on the binder). This technology is mainly used for prefabrication of concrete, but is more problematic for mortars which are mostly applied by hand.

One main disadvantage related to the use of the binders presented above is thus generally the presence of strong bases in large amounts in order to allow sufficiently rapid setting of the binder. The presence of a source of calcium sulfate in some of these mixtures in a large amount in order to accelerate the curing of the cement, is also harmful. Such an excess of calcium sulfate can result in the formation of an excess of ettringite at an advanced stage of the setting of the cement and during its curing, this excess of ettringite, like the important presence of unreacted calcium sulfate, also possibly causing undesirable expansions of the material and consequently a loss in strength and in durability which can end in the destruction of the material.

Other problems in the preparation or manipulation of such alternative formulations reducing the amount of traditional Portland cement can also arise, like, for example, in application WO2007/096686 relating to a binder composition comprising, on the one hand, a mixture of slag and fly ash and, on the other hand, an activator comprising different bases, such composition not constituting a hydraulic binder directly ready for use. Indeed, the activators and the mixture of slag with fly ash have in particular to be brought into contact separately with water, before mixing the two fractions, which complicates the preparation of the mortars or concretes.

The present invention has therefore sought to remedy the previous drawbacks and to propose a new, more satisfactory binder for a mortar as well as a mortar formulation, in particular for mortars destined to the construction market (in particular mortars for tile fixing, grouts, floors, renders, etc.).

The present inventors have in particular turned towards the enhancement in value of waste products based on mineral wool, in particular on stone wool or on glass wool. Usually, the waste products from the production of mineral wool are agglomerated in the form of shaped composites, frequently designated by the term of "briquettes" (other names being available according to the geometry of the shaped waste), which can be recycled in the process for manufacturing mineral wool. The inventors have thus considered recycling glass wool and stone wool by using them in the present mortar field, as mineral wool wastes from deconstruction will be more and more an issue in the future due to increasing volumes to recycle. Yet, the glass wool or stone wool (and also possibly slag wool which is less present on the market) generally contains phenolic resins or sugar or a mix of both, these organic components delaying cement hydration and mechanical properties and reducing the possible dilution of the cement binder, which prevented their notable use in cementitious products until now.

The inventors have thus looked for and found a new formulation for the mortar field which can at the same time have several positive impacts on the environment, both reducing emissions of carbon dioxide and allowing to recycle more constructions waste, while being easy to prepare and handle and while showing looked for properties, like good mechanical resistance, for the considered mortar applications.

These goals have been achieved through a process for making a binder for a mortar, according to claim 1. A binder for a mortar according to claim 11 and a dry mortar composition according to claim 13 have also achieved these goals.

The present invention thus concerns a process for making a binder for a mortar, comprising co-milling mineral wool fragments with a dry hydraulic binder to obtain particles having a particle size distribution in volume such that the D90 is less than 100 µm, as well as the binder obtainable by this process.

If needed, to distinguish the binders mentioned in the above definition, the binder for mortar as claimed can be called "mortar binder" to distinguish it from the hydraulic binder(s) it includes as component(s), this or these last binders being then called "constituting binder(s). Also, by default, when speaking of "hydraulic binder", it is referred to a "constituting binder", and when speaking of "binder of the invention ", it is referred to the mortar binder as claimed.

The inventors have discovered that by co-milling mineral wool fragments with a dry hydraulic binder (or a mixture of hydraulic binders, as explained below) it was possible to obtain a satisfactory and useful binder for a mortar, and that the properties of the obtained binder differed from the properties of a binder obtained by the mere mixture of hydraulic binder on one hand and of milled mineral wool on the other hand. Without wishing to be bound by any theory, it seems that the co-milling of mineral wool fragments with harder hydraulic binder particles makes it possible to improve the cutting of the fibers and therefore to obtain finer particles, which are more reactive. The alkali-silica reaction between the fibers and the hydraulic binder is also avoided, reducing the occurrence of cracking of the mortar after hardening. In addition, the length/diameter ratio of the obtained particles of mineral wool is strongly reduced, and can be less than 3, so that the particles can no longer be considered as fibers. This allows to use mineral wool coming from demolition of old buildings, that used fibers which did not comply with the current biopersistence requirements.

The (mortar) binder according to the invention is in particular in dry form, notably in powdered (or powder) form. The details that follow are applicable both to the process and to the binder.

Preferably, the weight proportion of mineral wool fragments with respect to the dry hydraulic binder is 10:90 to 90:10, in particular 30:70 to 70:30, and even 40:60 to 60:40.

The "hydraulic binder" designates a binder (formed of one compound or of a mixture of compounds) as already used in the mortar formulation field, and which can be active in itself (or hydraulic by nature), like cement, or which can be latent (acting with the addition of an activator), like blast furnace slag or fly ash, or which can be mixed (mix. of active and latent hydraulic binders).

In particular, the hydraulic binder can be chosen from (or among) cements, like Portland cements (in particular of CEM I or CEM II type), belitic cements, aluminous cements, magnesium cements, slags, fly ashes, natural or calcined pozzolans etc.

The hydraulic binder preferably comprises, or even consists of, a slag or slags, especially chosen from an electric arc furnace slag, a basic oxygen furnace slag, a blast furnace slag, a ladle slag and mixtures thereof.

Slags are, in the steel industry, the scoria formed during the melting or elaboration of metal and metallic alloys by liquid means, said slags being mixtures essentially composed of silicates, aluminates and lime. Said slags are also themselves byproducts of the industry, their use in the present invention also being advantageous in terms of the objectives of the present invention as well as in terms of the properties obtained by-co-milling with the mineral wool fragments in the considered mortar formulations and application.

The slag is even more preferably ladle slag(s). Ladle slags are derived from (or obtained during) the production of stainless steel. In said production, the final phase of the metallurgical operation by which stainless steel is produced takes place in a continuous casting ladle, where a molten layer of slag (the ladle slag) is maintained on top of the liquid metal, serving to prevent its oxidation and minimize heat losses, as well as ensuring the desired alloy composition.

Ladle slag has proven particularly useful, especially thanks to its high hardness (compared with other slags), which improves the properties of the binder obtained after co-milling. It is also preferred because of its mineralogy, because it contains useful crystalline phases such as C3A, C12A7 and C2S.

In its most preferred embodiment, the invention therefore makes use of by-products and wastes, slag and especially ladle slag one hand, and recycled mineral wool on the other hand, which is especially beneficial for the environment.

The hydraulic binder preferably includes less than 20wt%, even less than 10wt% (compared to the binder dry weight) of cement (chosen among Portland cement, belitic cements, aluminous cements, calcium aluminate cements, sulfoaluminate cements, magnesium cements), and more preferably it is even devoid of cement.

The particles of the binder have a particle size distribution in volume such that their D90 is less than 100 µm. Preferably, the D90 is less than 70 µm, or less than 50 µm, even less than 40 µm, and/or more than 10 µm.

The particle size distribution is preferably measured by laser granulometry in accordance with ISO 13320:2009.

The binder for a mortar preferably comprises an activation system. The terms "activation system" within the invention defines a system comprising at least one compound intended to improve the setting and/or hardening of the binder.

The activation system is especially either co-milled with the dry hydraulic binder and the mineral wool fragments or is added after the co-milling.

The activation system advantageously comprises (or consists of) at least one water-soluble calcium salt and at least one alkali metal silicate or alkali metal carbonate compound. Preferably, the activation system comprises (or consists of) at least one water-soluble calcium salt and at least one alkali metal silicate compound.

The alkali metal silicate is in particular a silicate of an alkali metal chosen from potassium, lithium and/or sodium, notably is selected from sodium silicate, sodium metasilicate, potassium silicate, potassium metasilicate, lithium silicate, lithium metasilicate and mixtures thereof. Preferably the alkali metal silicate is selected from sodium silicate, sodium metasilicate and mixtures thereof.

The water-soluble calcium salt is in particular selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulfide, calcium hydroxide, calcium sulfamate and mixtures thereof. Preferably, the calcium salt is selected from calcium hydroxide, calcium nitrate and mixtures thereof.

The weight ratio of the amount of the calcium salt over the amount of the alkali metal silicate in the activation system is preferably between 0.2 and 2, more preferably around 1 (the system comprising in this case as much calcium salt as alkali metal silicate).

The amount of the activation system is preferably less than 50wt% with respect to the total weight of mineral wool fragments and hydraulic binder. This amount is preferably less than 20wt%. The contents of calcium salt and the content of alkali metal silicate especially each represents from 0.5% to 10% of the total weight of mineral wool fragments and hydraulic binder, and preferably between 0.8% and 5% of the total weight of the mineral wool fragments and the hydraulic binder, said amounts in particular and said selected activating mix being efficient to compensate for the significant retarding effect in the setting due notably to the sugars present in the binding composition of the mineral wool waste.

It is to be noted about this that mineral wool residues or waste are generally agglomerated in the form of briquettes or other compact shapes in order to be recycled, these mineral wool residues being mixed with a binder that ensures the cohesion and the hardening of the assembly in the desired form, this binder being generally a cementitious binder. The mineral wools also themselves initially comprise a binder (hereafter called, if needed, "wool binder" to distinguish it from the "mortar binder" or the "constituting binder" previously mentioned) which used to be based on phenolic resins, but which has been replaced recently with binders based on raw materials derived from renewable resources and in particular comprising sugar-based resins, the amount of said resins being quite high. However, sugar is a cement setting retarder, and also leads to a significant reduction in the mechanical strength and in the abrasion resistance of the agglomerates. Yet, according to the invention, it is possible to directly use waste from fibres sized by sugar-based resins, without needs to modify the binder system, the selected activation system in particular compensating the retarding effects that may be induced by the sugars present in the mineral wool binder.

The "mineral wool fragments" to which it is referred in the definition of the invention are understood to mean all the residues of products comprising mineral wool. These residues may be derived from the production of mineral wool. They may also be derived from finished products comprising mineral wool panels, such as for example the glass wool panels used in ceilings or walls. The fragments are preferably obtained from used panels, obtained from renovation or deconstruction works. The mineral wool fragments are preferably made by shredding mineral wool wastes. The invention is therefore particularly useful in that it makes it possible to recycle such products.

The mineral wool is preferably a stone wool, a glass wool or a slag wool.

The fibres of the mineral wool preferably have a chemical composition comprising 30-75wt% SiO₂, 5-40wt% CaO+MgO, 0-20wt% Na₂O+K₂O, 0-30wt% Al₂O₃ and 0-15wt% Fe₂O₃. The glass wool fibres preferably have a chemical composition comprising 50-75wt% of SiO₂, 12-20wt% Na₂O+K₂O, 5-20wt% CaO+MgO, 0-8wt%, in particular 0-3wt% Al₂O₃ and 2-10wt% B₂O₃. The stone wool fibres preferably have a chemical composition comprising 30-50wt% SiO₂, 10-26wt% Al₂O₃, 15-40wt% CaO+MgO, 0-5wt% Na₂O+K₂O and 3-15wt% Fe₂O₃. The slag wool fibres preferably have a chemical composition comprising 30-45wt% SiO₂, 5-18wt% Al₂O₃, 30-60wt% CaO+MgO and 0-3wt% Na₂O+K2O.

The mineral wool preferably comprises 0.1 to 10wt% of an organic binding composition, especially comprising a sugar.

The term "sugar" is understood to mean carbohydrates such as monosaccharides, disaccharides, oligosaccharides, polysaccharides, including sugar alcohols, and mixtures thereof. Sugar-based binding compositions used for mineral wool are in particular described in applications US 2010/0282996, US 2012/0263934, WO 2012/168619 or WO 2012/168621. The binding composition/wool binder included in the mineral wool (and in the mineral wool fragments and granules) generally represents 0.1% to 10% by weight, and more particularly 0.5% to 7% by weight in dry, with respect to the total weight of the dry mineral wool fragments, the sugar(s) (or sugar-based resin(s)) being present in the binding (or sizing) composition in a proportion of 30 to 90% by weight of the dry binding composition.

The co-milling of the mineral wool fragments, the hydraulic binder, and optionally the activating system, is carried out especially in a mill, preferably a ball-mill, by simultaneously introducing the mineral wool fragments, the hydraulic binder, and optionally the activation system.

The present invention also relates to a dry mortar composition comprising the binder according to the invention and aggregates.

The dry mortar is obtained by mixing at least the aggregates with the binder in dry form. A wet mortar can be obtained by mixing said components in the presence of water, the water in the mixture being in a proportion of 5 to 30% of the weight of the mixture. A render (or rendering or coating) can be obtained from the wet mortar, once hardened, after it has been applied or used in its intended application.

Preferably, the amount of binder is 10 to 60wt% and the amount of aggregates is 40 to 90wt%. The aggregates generally used in the mortar compositions have a diameter of less than 8 mm. These aggregates are mineral grains, in particular grains of stone, gravel, grit, pebbles and/or sand(s). Aggregates may also comprise fillers, which are finely ground inert mineral materials, of calcareous or siliceous type. Their content is generally from 0 to 30% by weight relative to the dry mortar composition.

The mortar or render composition may also comprise one or more additives, chosen in particular from rheological agents, water-retaining agents, air-entraining agents, thickeners, dispersants, pigments, accelerators and/or retarders, polymers/polymeric resins, water-repelling agents, flocculating agents, latexes, bonding agents and cationic surfactant agents, these various additives allowing in particular to adapt when appropriate the setting time or the rheology of the wet mortar composition, i.e. after mixing with water, so as to meet the expectations of the intended use and realized product. The total content of additives usually varies from 0% (or when present at least 0.001%) to 10% by weight relative to the total weight of the dry mortar composition.

The present invention also relates to technical mortars or construction products (or materials), such as adhesive mortars, jointing mortars or grouts, screeds, floor coatings, façade mortars, internal or external wall coatings, smoothing mortars, undercoats, single coats or monolayer renders, waterproofing mortars, masonry mortars, resurfacing mortars, etc, obtained after hydration and hardening of the dry mortar composition previously mentioned.

The examples below illustrate the invention without limiting the scope thereof.

Reference example: a mortar has been obtained by mixing 10wt% Ordinary Portland Cement (OPC - CEM I 52.5N) as the hydraulic binder with 81.8wt% sand (0-3 mm), 8wt% limestone filler and 0.2wt% additives (including cellulose ethers and redispersible polymer powders). After mixing with water and hardening, the following properties have been measured:
- compressive strength: 3.92 MPa (3 days), 5.63 MPa (7 days), 8.78 MPa (14 days), 9.3 MPa (21 days, 28 days and 42 days)
- flexural strength: 1.65 MPa (3 days), 3.56 MPa (14 days), 3.65 MPa (28 days).

In the application of interest, the targeted value for the compressive strength after 28 days is at least 5 MPa.

The inventive examples 1 to 3 differ from the reference example in that the OPC is replaced by a mixture of ladle slag and mineral wool, milled together in order to obtain a particle size distribution having a d50 of 10 µm, with the addition of 2.8wt% of sodium silicate Na₂SiO₃ and 2.8wt% of Ca(OH)₂.

Example 1: ladle slag and glass wool are used with a ladle slag:glass wool weight ratio of 70:30.

The following properties have been measured:
- compressive strength: 3.18 MPa (3 days), 4.6 MPa (7 days), 6.18 MPa (14 days), 6.49 MPa (21 days), 7.03 MPa (28 days) and 6.90 MPa (42 days)
- flexural strength: 1.24 MPa (3 days), 2.28 MPa (14 days), 2.66 MPa (28 days).

Example 2: ladle slag and glass wool are used with a weight ratio of 50:50.

The following properties have been measured:
- compressive strength: 3.56 MPa (3 days), 5.11 MPa (14 days), 6.35 MPa (14 days), 7.54 MPa (21 days), 7.94 MPa (28 days) and 8.83 MPa (42 days)
- flexural strength: 1.39 MPa (3 days), 1.19 MPa (14 days), 2.66 MPa (28 days).

Example 3: ladle slag and glass wool are used with a ladle slag:glass wool weight ratio of 30:70.

The following properties have been measured:
- compressive strength: 3.62 MPa (3 days), 5.45 MPa (7 days), 6.47 MPa (14 days), 7.18 MPa (21 days), 8.29 MPa (28 days), 8.9 MPa (42 days)
- flexural strength: 1.45 MPa (3 days), 1.41 MPa (14 days), 2.34 MPa (28 days).

Comparative example: the comparative example differs from Example 1 in that the ladle slag and glass wool have not been milled together, but separately.

The following properties have been measured:
- compressive strength: 2.06 MPa (3 days), 2.84 MPa (7 days), 4.36 MPa (14 days), 4.76 MPa (21 days), 4.83 MPa (28 days) and 5.00 MPa (42 days),
- flexural strength: 0.88 MPa (3 days), 1.78 MPa (14 days), 1.86 MPa (28 days).

The grinding kinetics of glass wool with and without ladle slag have been compared using a ball mill and steel cylpebs as grinding media. The time needed to obtain a d50 of 10 µm was 80 minutes without ladle slag. The addition of ladle slag in the mill made it possible to reduce this time to 55 minutes for a mixture of 50:50 ladle slag/glass wool, and even 26 minutes for a mixture of 70:30 ladle slag/glass wool.

In addition, the d99-value was higher than 100 µm for the glass wool alone, and lower than 30 µm for the ladle slag/glass wool mixtures, which shows that co-milling of mineral wool with slag made it possible to strongly reduce the length of the fibers.

## Claims

1. A process for making a binder for a mortar, comprising co-milling mineral wool fragments with a dry hydraulic binder to obtain particles having a particle size distribution in volume such that the D90 is less than 100 µm.

2. The process according to claim 1, wherein the weight proportion of mineral wool fragments with respect to the dry hydraulic binder is 10:90 to 90:10, in particular 30:70 to 70:30.

3. The process according to claim 1 or 2, wherein the mineral wool is a stone wool, a glass wool or a slag wool and wherein said mineral wool comprises 0.1 to 10wt% of an organic binding composition, especially comprising a sugar.

4. The process according to any one of claims 1 to 3, wherein the hydraulic binder comprises a slag, especially chosen from an electric arc furnace slag, a basic oxygen furnace slag, a blast furnace slag, a ladle slag and mixtures thereof.

5. The process according to any one of claims 1 to 4, wherein the hydraulic binder comprises less than 20wt% of cement, in particular is devoid of cement.

6. The process according to any one of claims 1 to 5, wherein an activation system is either co-milled with the dry hydraulic binder and the mineral wool fragments or added after the co-milling, the amount of activation system being less than 50wt% with respect to the total weight of mineral wool fragments and hydraulic binder.

7. The process according to claim 6, wherein the activation system comprises at least one water-soluble calcium salt and at least one alkali metal silicate compound.

8. The process according to claim 7, wherein the alkali metal silicate compound is a silicate of an alkali metal chosen from potassium, lithium and/or sodium, in particular is selected from sodium silicate, sodium metasilicate, potassium silicate, potassium metasilicate, lithium silicate, lithium metasilicate and mixtures thereof.

9. The process according to claim 7 or 8, wherein the water-soluble calcium salt is selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulfide, calcium hydroxide, calcium sulfamate and mixtures thereof.

10. The process according to any one the preceding claims, comprising shredding mineral wool wastes to make mineral wool fragments.

11. A binder for a mortar obtainable by the process according to the preceding claims.

12. The binder according to claim 11, the particles of which have a particle size distribution in volume such that the D90 is less than 70 µm, in particular less than 40 µm.

13. A dry mortar composition comprising a binder according to claim 11 or 12 and aggregates.

14. A dry mortar composition according to claim 13, wherein the amount of binder is 10 to 60wt% and the amount of aggregates is 40 to 90wt%.

15. A technical mortar or construction product, such as adhesive mortar, jointing mortar or grout, screed, floor coating, façade mortar, internal or external wall coating, smoothing mortar, undercoat, single coat or monolayer render, waterproofing mortar, masonry mortar, resurfacing mortar, obtained after hydration and hardening of a dry mortar composition according to the preceding claim.
